# EUROPEAN PATENT APPLICATION

(11) **EP 3 919 418 A1**
(43) Date of publication of application: **08.12.2021**
(21) Application number: 20178145.7
(22) Date of filing: 04.06.2020
(51) Int. Cl.: B65G 47/86, B65G 54/02, B67C 7/00, B65G 47/08, B65G 47/84

(54) **TREATMENT APPARATUS FOR RECEPTACLES AND METHOD OF TREATING RECEPTACLES**

(71) Applicant: Sidel Participations, 76930 Octeville-sur-Mer (FR)
(72) Inventor: ZONI, Roberto, 43126 Parma (IT)
(74) Representative: Sidel Group

(57) **Abstract**

There is described a treatment apparatus (1, 1') for the treatment of receptacles (2), comprising a first treatment machine (3), a second treatment machine (4), a linear conveyor (5) comprising a plurality of mechanically independent carts (6) and configured to carry out, for each cart (6), a respective transporting step, during which the cart (6) is subjected to a respective transporting movement along an endless track (P), said transporting movement comprising the cart (6) doing one or more laps along the endless track (P) and a control unit (7) configured to control operation of at least the carts (6) along the endless track (P). The control unit (7) is configured to control each of said carts (6) such that each cart (6) carries out, during one single lap a respective first releasing step, for releasing a first receptacle (2) to the first treatment machine (3), a respective first receiving step, during which the cart (6) receives from the first treatment machine (3) a second respective receptacle (2), a respective transferring step for transferring the respective second receptacle (2) from said first treatment machine (3) to said second treatment machine (4), a respective second releasing step, for releasing the second receptacle (2) to said second treatment machine (4) and a second receiving step, for receiving a respective third receptacle (2) from second treatment machine (4).

## Description

### TECHNICAL FIELD

The present invention relates to a treatment machine for the treatment of receptacles, in particular bottles.

Advantageously, the present invention also relates to a method of treating receptacles, in particular bottles.

### BACKGROUND ART

There are known treatment apparatuses for the treatment of receptacles such as bottles, containers, cans or the like. A typical treatment apparatus comprises a plurality of treatment machines, each one configured to execute one respective treatment step on the receptacles, and a conveyor configured to advance the receptacles to and from the treatment machines.

Example treatment machines are filling machines for filling the receptacles with a pourable product, capping machines for applying closures onto the receptacles and labeling machines for applying labels.

In order to allow for increased throughput of the treatment apparatus, at least some of the treatment machines are of the rotary type having a respective carousel rotating, in use, around a respective rotation axis.

In such treatment apparatuses, the conveyor typically comprises a plurality of star wheels for feeding the receptacles to and from the treatment machines. Some of the star wheels are interposed between two respective treatment machines so as to deliver the receptacles exiting from one of the treatment machines to the other one.

This requires that the operation of each treatment machine is dependent on the operation of the other ones and/or buffers need to be foreseen in order to compensate for any differences in the operating speeds of the single treatment machines.

Therefore, it is the desire to further improve the known treatment apparatuses.

Therefore, it is a further desire to improve the methods of treating receptacles.

### DISCLOSURE OF INVENTION

It is therefore an object of the present invention to provide in a straightforward and low-cost manner a treatment apparatus overcoming at least one of the above-mentioned drawbacks.

It is another object of the present invention to provide in a straightforward and low-cost manner a method of treating receptacles overcoming at least one of the above-mentioned drawbacks.

According to the present invention, there is provided a treatment apparatus according to the independent claim 1.

According to the present invention, there is provided a method according to the independent claim 10.

Further advantageous embodiments of the treatment apparatus and the method are specified in the respective dependent claims.

### BRIEF DESCRIPTION OF THE DRAWINGS

Two non-limiting embodiments of the present invention will be described by way of example with reference to the accompanying drawings, in which:
Figure 1 is a schematic top view of a treatment apparatus according to a first embodiment of the present invention, with parts removed for clarity;
Figure 2 is a perspective view of a detail of the treatment apparatus of Figure 1, with parts removed for clarity;
Figures 3A and 3B are top views of sections of the detail of the treatment apparatus of Figure 2, with parts removed for clarity;
Figures 4A and 4B are perspective views of the sections of respectively Figures 3A and 3B, with parts removed for clarity;
Figure 5 is a schematic top view of a treatment apparatus according to a second embodiment of the present invention, with parts removed for clarity; and
Figure 6 is a perspective view of a detail of the treatment apparatus of Figure 5.

### BEST MODES FOR CARRYING OUT THE INVENTION

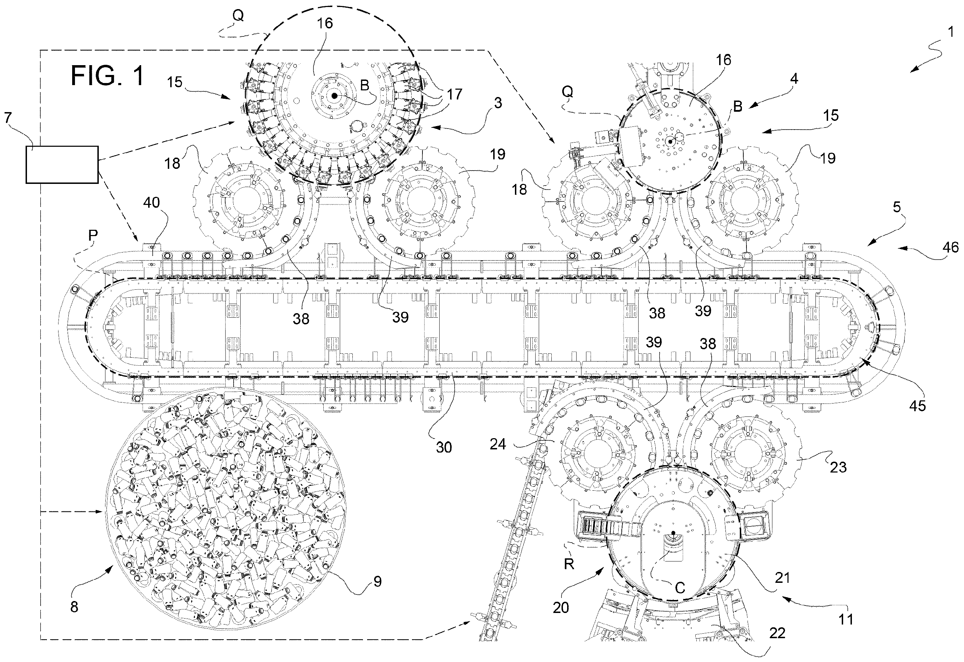

With particular reference to Figure 1, reference number 1 indicates as a whole a treatment apparatus for treating receptacles 2.

The receptacles can be of any type including bottles 2, jars, vessels, receptacles or the like, in particular being made of base components, like glass, paper or cardboard, plastics, aluminum, steel, and composites. In particular, the receptacles are adapted to be filled with a pourable product, in particular a pourable food product and/or a pourable non-food product.

Furthermore, each receptacle may also be formed by a respective base and a respective main receptacle arranged within the base.

In the following, we limit the description to the specific example of bottles 2 adapted to be filled with any type of pourable food product such as carbonated liquids (e.g. sparkling water, soft drinks and beer), non-carbonated liquids (including still water, juices, teas, sport drinks, wine, etc.) and beverages containing pulps or bottles 2 being adapted to be filled with pourable non-food products such as (cleaning and/or washing) detergents, shampoo, shower gel and the like. However, it should be clear that the invention also relates to other types of receptacles. It should also be clear that the invention also relates to receptacles, which are adapted to be filled with other kinds of pourable products such as mineral oil, edible oil, sugar, salt and others.

In the following, the term "bottle" can be replaced by the term "receptacle" and the term "bottles" can be replaced by the term "receptacles".

In particular, each bottle 2 extends along a longitudinal axis A and comprises a pouring/inlet opening allowing for the introduction and the outpouring of the pourable product respectively into and out of bottle 2.

With particular reference to Figure 1, treatment apparatus 1 comprises at least:
- a first treatment machine 3 configured to carry out sequentially on each bottle 2 a respective first treating step sequentially;
- a second treatment machine 4 configured to carry out sequentially on each bottle 2 a respective second treating step different from the first treating step;
- a linear conveyor 5 comprising a plurality of mechanically independent carts 6 and configured to carry out, for each cart 6, a respective transporting step, during which the cart 6 is subjected to a respective transporting movement along an endless track P, said transporting movement comprising the cart 6 doing one or more laps along endless track P; and
- a control unit 7 configured to control operation of treatment machine 1, in particular to control the transporting movement of carts 6 along endless track P.

It should be noted that the term "mechanically independent" with regard to carts 6 means that, in use, the respective transport movement of each cart 6 is

(substantially) independent from the respective transport movement of the other carts 6. In particular, in use, each cart 6 can be accelerated and decelerated independently from the other carts 6 and each cart 6 can advance at a respective velocity independent from the other carts 6.

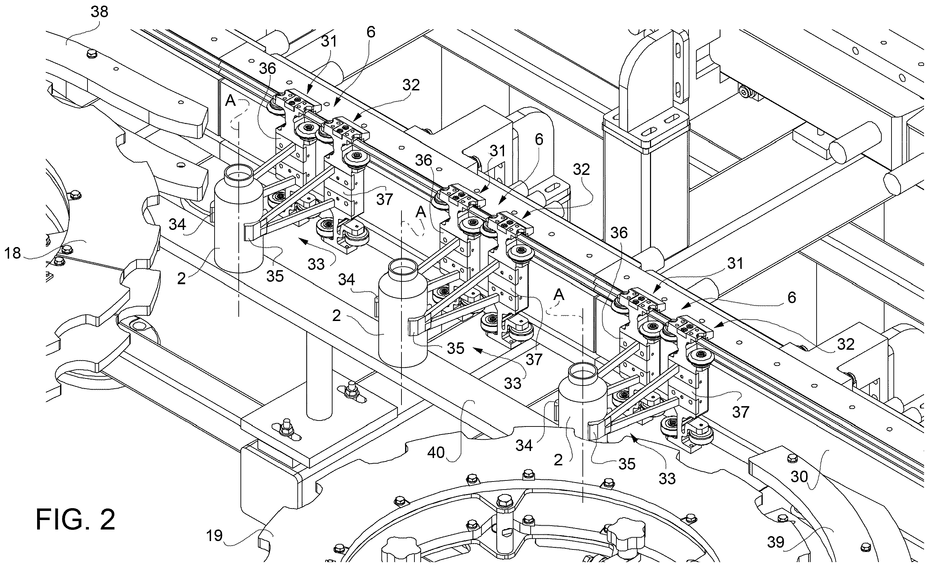

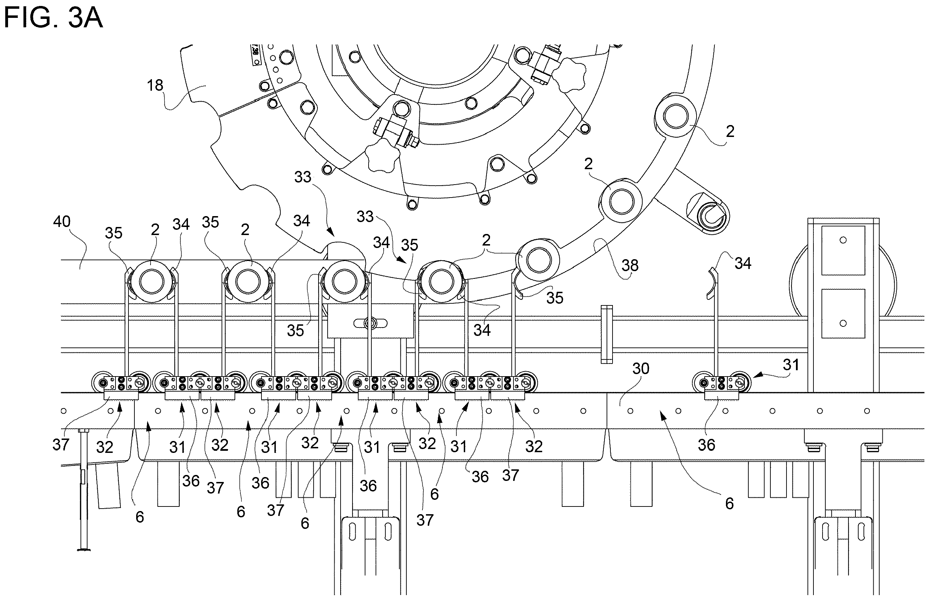

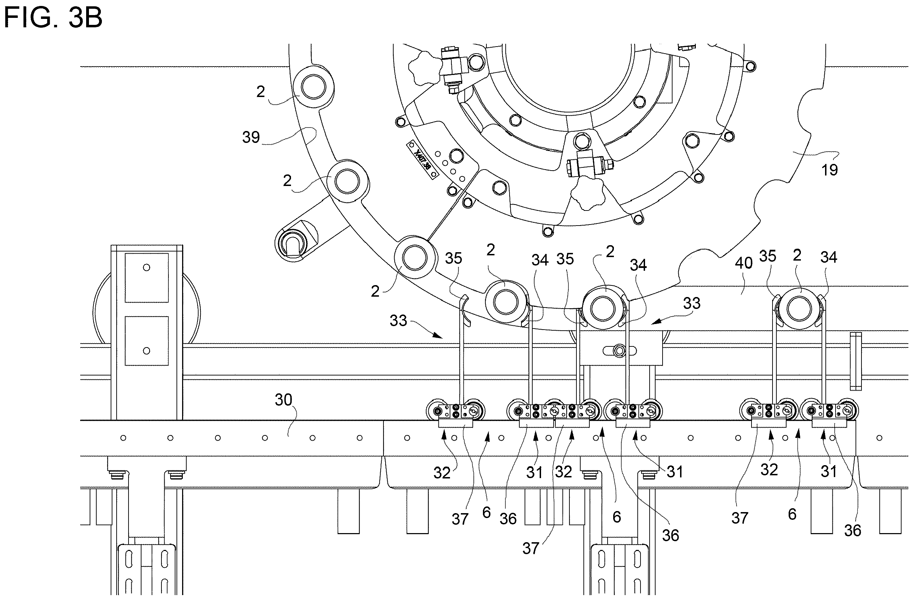

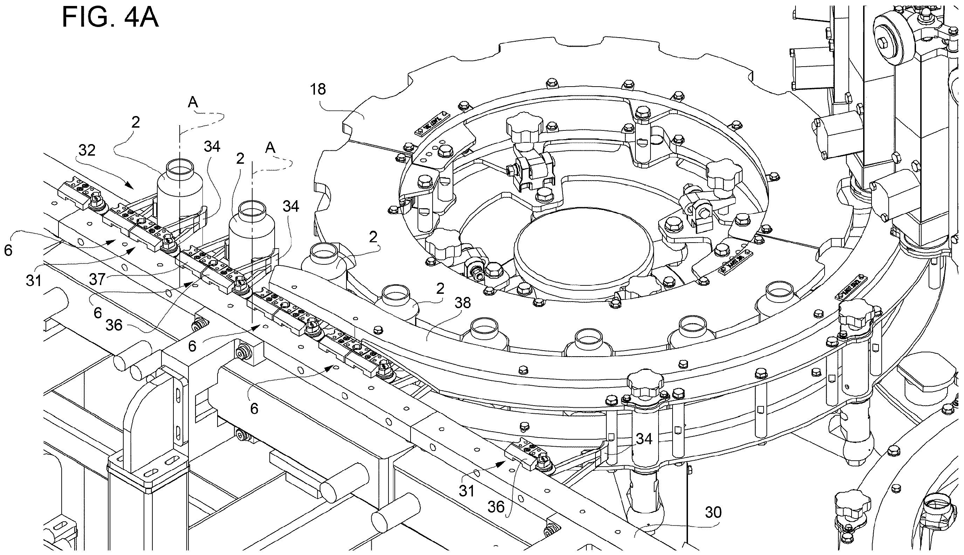

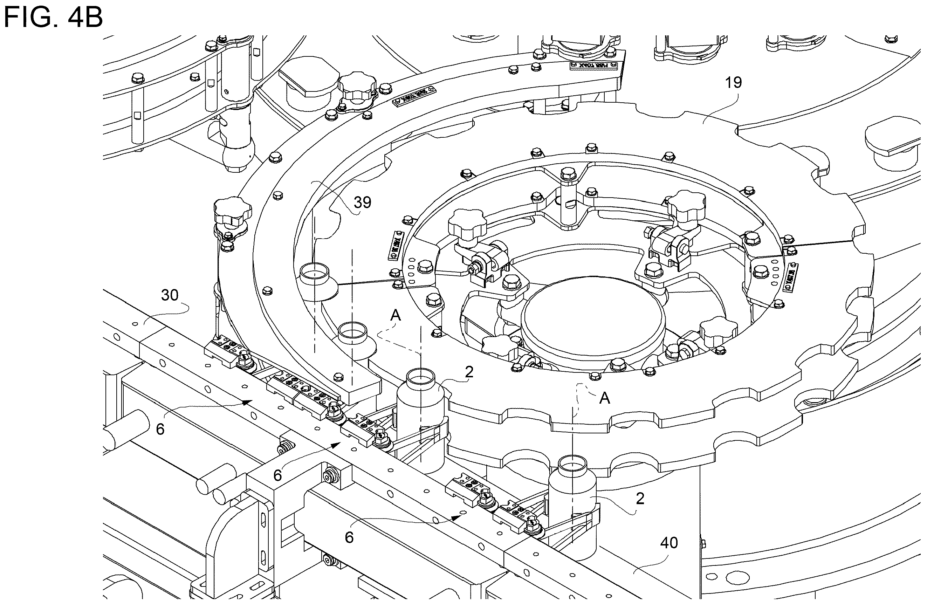

Advantageously and with particular reference to Figures 1 to 4B, control unit 7 is configured to control each of said carts 6 such that each cart 6 carries out, during one single lap:
- a respective first releasing step (see Figure 3A), during which the respective cart 6 releases to first treatment machine 3 a first respective bottle 2 of the plurality of bottles 2;
- a respective first receiving step (see Figure 3B), during which the respective cart 6 receives from first treatment machine 3 a second respective bottle 2 of said plurality of bottles 2;
- a respective transferring step (see Figure 2), during which the respective cart 6 transfers the respective second bottle 2 from first treatment machine 3 to second treatment machine 4;
- a respective second releasing step (see Figure 4A), during which the respective cart 6 releases the second bottle 2 to second treatment machine 4;
- a respective second receiving step (see Figure 4B),
during which the respective cart 6 receives from second treatment machine 4 a respective third bottle 2 of the plurality of bottles 2.

For example, Figure 3A can be considered as referring to the first releasing step, Figure 3B can be considered as referring to the first receiving step, Figure 4A can be considered as referring to second releasing step, and Figure 4B can be considered as referring to the second receiving step.

First bottle (or first receptacle), second bottle (or second receptacle), and third bottle (or third receptacle), are to be considered different or distinct from each other. Therefore the second bottle (or second receptacle) is different or distinct with respect to the first bottle (or first receptacle), and the third bottle (or third receptacle) is different or distinct from the first bottle (or first receptacle) and from the second bottle (or second receptacle).

However, preferably, each of said first bottle (or first receptacle), second bottle (or second receptacle) and third bottle (or third receptacle), has preferably the same characteristics or features, in the sense that each of them belongs to the same type of receptacle.

Thanks to each cart 6 being able to carry out, in one sigle lap, the above first releasing step, first receiving step, transferring step, second releasing step, and second receiving step, the apparatus 1 does not require complex mechanical systems during the transferring step for adapting an operating parameter of the first machine 3 to the same operating parameter of the second machine 4. Therefore it is reduced the mechanical complexity of the apparatus and consequently it is increased the flexibility of the apparatus with respect to a variation of said operating parameter in at least one of the machines 3 and 4.

Preferentially, treatment apparatus 1 also comprises a feeding machine 8 configured to carry out sequentially, with respect to each bottle 2, a respective feeding step, during which the respective bottle 2 is fed to linear conveyor 5, in particular to one respective cart 4, before the respective first treatment step.

According to the non-limiting embodiment shown, feeding machine 8 comprises a buffer 9 containing a plurality of bottles 2 and distributing means for distributing bottles 2 during the respective feeding steps to linear conveyor 5, in particular to one respective cart 6.

In alternative or in addition, feeding machine 8 could comprise a molding device for molding bottles 2.

Preferentially, treatment apparatus 1 also comprises at least a third treatment apparatus 11 configured to carry out sequentially on each bottle 2 a respective third treatment step.

In particular, control unit 7 is also configured to control each of carts 6 such that each cart 6 also carries out, during the one single lap at least also a respective third releasing step, during which cart 6 releases the third bottle 2 to third treatment machine 11.

According to the specific embodiment shown, third treatment machine 11 is configured to feed bottles 2 after execution of the third treatment step bottles 2 away from treatment apparatus 1.

In alternative, treatment machine 11 could be configured to feed bottles 2 after execution of the third treatment step back to linear conveyor 5, in particular to respective carts 6. According to such an alternative embodiment, control unit 7 would be configured to control each of carts such that each cart 6 also carries out, during the one single lap at least also a respective third receiving step, during which cart 6 receives from third treatment machine 11 a respective fourth bottle 2 of the plurality of bottles 2.

Preferentially, treatment apparatus 1 comprises a discharge apparatus for discharging bottles 2 from linear conveyor 5 after the treatment of bottles 2. In the specific case shown and as already described, third treatment machine 11 also functions as the discharge apparatus.

The first machine 3 can be a rotative machine. The second machine 4 can be a rotative machine.

With particular reference to Figures 1 to 4B, each one of first treatment machine 3 and second treatment machine 4 comprises a respective rotative carousel 15 configured for executing sequentially on each bottle 2 respectively the respective first treating step and the respective second treating step.

In particular, each carousel 15 comprises a main body 16 rotatable around a respective rotation axis B and a plurality of treatment units 17 mounted onto the respective main body 16 and configured to advance along a respective (annular) path Q by means of rotation of main body 16 around the respective rotation axis B.

In particular, each treatment unit 17 is configured to retain and to treat (according to the respective treatment step) one respective bottle 2 during advancement of treatment unit 17 along a (arc-shaped) portion of path Q.

The operating parameter mentioned above can be for example a linear velocity imparted by the carousel 15 on each treating unit 17 along the path Q. Therefore, due to each cart 6 being able to carry out, in one single lap, the above receiving, releasing and transferring steps, it is improved the flexibility of the apparatus with respect to a variation of the linear velocity of the units 17 of the first machine 3 or of the second machine 4 and/or the apparatus may adapt very well to a difference in the linear velocity between the units 17 of the first machine 3 and the units 17 of the second machine 4.

Preferentially, each one of first treatment machine 3 and second treatment machine 4 also comprises at least one respective rotative input star wheel 18 (rotatable around a respective rotation axis) for conveying sequentially each bottle 2 to and/or towards the respective rotative carousel 15 and before execution of respectively the respective first treating step and the respective second treating step, and a respective rotative output star wheel 19 for conveying sequentially each bottle 2 from the respective carousel 15 and after execution of respectively the respective first treating step and the respective second treating step.

Preferentially, control unit 7 is configured to control each of carts 6 such that:
- during the respective first releasing step, the respective cart 6 releases the respective first bottle 2 to input star wheel 18 of first treatment machine 3;
- during the respective first receiving step, the respective cart 6 receives the respective second bottle 2 from the output star wheel 19 of first treatment machine 3;
- during the respective transferring step, the respective cart 6 transfers the respective second bottle 2 from the output star wheel 19 of the first machine 3 to the input star wheel 18 of second treatment machine 4;

- during the respective second releasing step, the respective cart 6 releases the respective second bottle 2 to the input star wheel 18 of second treatment machine 4; and
- during the respective second receiving step, the respective cart 6 receives the respective third bottle 2 from the output star wheel 19 of second treatment machine 4.

For example, input star 18 showed in Figure 3A can be considered as the input star 18 of the first machine 3, output star 19 showed in Figure 3B can be considered as the output star 18 of the first machine 3, input star 18 showed in Figure 4A can be considered as the input star 18 of the second machine 4, and output star 19 showed in Figure 4B can be considered as the output star 19 of the second machine 4.

Therefore any one of the receptacle 2 showed in Figure 3A can be considered as the first receptacle, any one of the receptacles showed in Figure 3B and in Figure 4A can be considered as the second receptacle, and any one of the receptacles 2 showed in Figure 4B can be considered as the third receptacle.

In this way, by means of the combination of the configuration of the conveyor 5 with the rotative nature of the machines 3 and 4, the releasing steps and the receiving steps can occur more gently. Therefore, the wear over time of the apparatus is reduced. Moreover, the risk of damaging or spoiling or deforming the receptacles 2 is reduced. Therefore the flexibility of the apparatus 1 is improved with also a reduction in the wear over time of the apparatus and/or a reduction of the risk of spoiling or deforming the receptacles 2.

According to the specific embodiment disclosed, first treatment machine 3 is a filling machine, so that said respective first treating step is a filling step, during which the respective bottle 2 is filled with a pourable product, such as a pourable food product or a pourable non-food product.

Example pourable food products are carbonated liquids (e.g. sparkling water, soft drinks and beer), non-carbonated liquids (including still water, juices, teas, sport drinks, wine, edible oil, etc.), beverages containing pulps and granular media such as salt or sugar. Example of non-pourable food products are (cleaning and/or washing) detergents, shampoo, shower gel, mineral oil and the like.

In particular, each one of the respective treatment units 17 of first treatment machine 3 comprise at least a filling device for filling bottles 2 with the pourable product.

According to the specific embodiment disclosed, second treatment machine 4 is a capping machine, so that said respective second treating step is a capping step, during which closing and/or sealing elements are applied onto the respective bottle 2.

Example closing and/or sealing elements are crown corks, screw caps, sports caps, stoppers, sealing foils and the like and they may be produced from a variety of materials such as plastics, cork, metal, composites and others. The closing and/or sealing elements may also vary in format.

In particular, each one of the respective treatment units 17 of second treatment machine 4 comprise at least a capping head for applying at least one closing and/or sealing element onto bottles 2.

It should be noted that in the specific embodiment disclosed first treatment machine 3 and second treatment machine 4 are configured to execute two different kinds of treatments. In an alternative embodiment, treatment machines 3 and 4 could be configured to execute the same kind of treatment; e.g. both treatment machines 3 and 4 could be configured to fill bottles 2 with a respective pourable product.

With particular reference to Figure 1, third treatment machine 11 comprises a respective rotative carousel 20 configured to advance bottles 2 along a respective arc-shaped path.

In particular, carousel 20 comprises:
- a main body 21 rotatable around a respective rotation axis C;
- a plurality of retaining units mounted onto main body 21 and configured to advance along a respective (annular) path R by means of rotation of main body 21 around the respective rotation axis C and to retain bottles 2 along a portion of path R; and
- at least one treatment device 22 arranged adjacent to carousel 20 and configured to executed in cooperation with carousel 20, in particular the retaining units, the third treatment step.

Preferentially, treatment machine 11 also comprises at least one respective rotative input star wheel 22 (rotatable around a respective rotation axis) for conveying sequentially each bottle 2 to and/or towards the rotative carousel 20 and before execution of the third treating step and at least one respective rotative output star wheel 23 (rotatable around a respective rotation axis) for conveying sequentially each bottle 2 from the respective carousel 20 and after execution of the respective third treating step.

According to the specific embodiment disclosed, third treatment machine 11 is a labeling machine configured to apply at least one respective label onto bottles 2. In particular, the labeling machine is configured to carry out sequentially on each bottle 2 a respective labelling step, during which the respective bottle 2 is labelled, in particular after the respective filling step.

In more detail, the treatment device 22 is configured to feed single label sheets (of the roll-fed type or the self-stick type or the heat-shrink type).

With particular reference to Figure 1, linear conveyor 5 comprises a linear motor 30 defining endless track P and is configured so that, for each of carts 6, the respective transporting movement are caused by means of an electromagnetic interaction between linear motor 30 and carts 6. In particular, carts 6 are coupled to linear motor 30 and advance along portions of linear motor 30.

According to the non-limiting embodiment shown, track P comprises linear and curved sections. Alternatively, track P could comprise only linear or only curved sections.

According to some preferred non-limiting embodiments, treatment machines 3 and 4, in particular also treatment machine 11 and feeding machine 8, are arranged adjacent to linear conveyor 5, in particular linear motor 30.

In more detail, first treatment machine 3 is arranged upstream of second treatment machine 4 with respect to the movement direction of carts 6 along endless track P. In even further detail, feeding machine 8 is arranged upstream of first treatment machine 3 and third treatment machine 11 is positioned downstream of second treatment machine 4 with respect to the movement direction of carts 6 along endless track P.

With particular reference to Figures 1 to 4B, each cart 6 comprises a respective first portion 31 and a respective second portion 32.

In particular, the respective first portion 31 and the respective second portion 32 of each cart 6, are independent from one another so as to allow, in use, for a modification of the relative position of the respective first portion 31 and the respective second portion 32 with respect to one another. Even more particular, each first portion 31 and each second portion 32 can, in use, be accelerated and decelerated and can advance at a respective velocity independently from respectively the respective second portion 32 and the respective first portion 31.

According to the specific embodiment shown, each cart 6 comprises a leading portion and a trailing portion defined by the respective first portion 31 and the respective second portion 32.

In the specific case shown, each first portion 31 defines the leading portion and each second portion 32 defines the trailing portion.

It should, however, be noted that movement of each first portion 31 and each second portion 32 along track P could be controlled such that first portion 31 may define a leading portion of one respective cart 6 and a trailing portion of another respective cart 6 and/or second portion 32 may define the respective trailing portion of one respective cart 6 and a leading portion of another respective cart 6.

According to some preferred non-limiting embodiment, control unit 7 is configured so that, for each cart 6, the respective first and second receiving steps and the respective first and second releasing steps are carried out by generating a relative movement between the respective first portion 31 and the respective second portion 32, said relative movement being along track P.

In this way, the mechanical interface between the conveyor 5 and the machines 3 and 4, for carrying out the receiving steps and the releasing steps, can be simpler. Therefore the mechanical complexity of the apparatus is furtherly reduced.

Moreover, this allows to make easier the coupling between the linear nature of the conveyor 5 and the rotative nature of the machines 3 and 4.

Moreover, during a releasing step, specifically after the second portion 32 has moved away from the first portion 31, the first portion 31 can keep on following for a certain time the receptacle 2 to be released, increasing the reliability of the apparatus 1 as regards the releasing steps.

Practically, during a releasing step, the cart 6 is divided along the track P in at least the two portions 31 and 32.

Also, during a receiving step, specifically before the first portion 31 approaches the second portion 32, the second portion 32 can start to follow or guide the receptacle, increasing the reliability of the apparatus as regards the receiving steps.

During a receiving step, the two portions 31 and 32 practically come back together.

In more detail, each cart 6 comprises one respective retaining assembly 33 configured to selectively retain one respective bottle 2. In particular, each retaining assembly 33 is controllable between at least a closed configuration in which retaining assembly 33 is configured to retain one respective bottle 2 and an open configuration in which the retaining assembly 33 is configured to release and/or receive one respective bottle 2.

In further detail, each retaining assembly 33 has a first clamping element 34 and a second clamping element 35. In particular, each retaining assembly 33 is controlled into the respective closed configuration and open configuration by controlling the relative position between the respective first clamping element 34 and the respective second clamping element 35.

According to some preferred non-limiting embodiments, each first portion 31 comprises a part of the respective retaining assembly 33 and the respective second portion 32 comprises another part of the respective retaining assembly 33.

Preferentially, each first portion 31 comprises the respective first clamping element 34 and each second portion 32 comprises the respective second clamping element 35. Even more preferentially, the relative position between each first portion 31 and the respective second portion 32 defines the relative position between the first clamping element 34 and the second clamping element 35.

With particular reference to Figures 2 to 4B, each first portion 31 comprises a first supporting element 36 supporting the respective first clamping element 34 and each second portion 32 comprises a second supporting element 37 supporting the respective second clamping element 35. In particular, each first clamping element 34 transversally protrudes away from the respective first supporting element 36 and each second clamping element 35 transversally protrudes away from the respective second supporting element 37.

In particular, each second supporting element 37 is mechanically independent from the respective first supporting element 36 (i.e. each second supporting element 37 and the respective first supporting element 36 can, in use, be accelerated and/or decelerated independently from one another).

Preferentially, the relative movement between each first portion 31 and the respective second portion 32 occurs, in use, between a clamping condition of the respective cart 6 (at which the respective retaining assembly 33 is in the closed configuration), according to which one respective bottle 2 (in particular, one of first or second or third bottle 2) is clamped by the respective cart 6 (in particular the respective retaining assembly 33) and between the respective first clamping element 34 and the respective second clamping element 35, in such a way that the clamped bottle 2 is integral with the respective transporting movement, and a releasing condition of the respective cart 6 (at which the respective retaining assembly 33 is in the open configuration), in which none of bottle 2 is clamped by cart 6.

In this way each cart 6 can also easily discards a receptacle 2 if at least one problem is detected regarding at least one of the treating step to which the receptacle has been subjected.

In particular, the relative movement of each first portion 31 and the respective second portion 32 is such to approach towards and to withdraw from one another in order to obtain respectively the clamping condition of the respective cart 6 (i.e. the closed configuration of the respective retaining assembly 33) and the releasing condition of cart 6 (i.e. the open configuration of the respective retaining assembly 33).

Preferentially, each first supporting element 36 and each second supporting element 37 is moveably coupled to linear motor 30.

In particular, control unit 7 is configured to control the respective transporting movement of carts 6 and the respective relative movement of the respective first and second portions 31 and 32 by means of an electromagnetic interaction between linear motor 30 and the respective first and second supporting elements 36 and 37.

This kind of interaction makes easier the combined managing of the transporting movement of each cart 6 and of the relative movement between the portions 31 and 32 of each cart 6.

In more detail, control unit 7 is configured such to control each first portion 31 and each second portion 32 such that:
- during execution of the first releasing step and/or the second releasing step, the second clamping element 35 is (remains) in contact with the respective advancing (first or second) bottle 2 and the respective first clamping element 34 is withdrawn from the respective second clamping element 35 and, therewith, the respective (first or second) bottle 2; in particular, the respective first portion 31, even more particular the respective first supporting element 36, is accelerated with respect to the respective second portion 32, even more particular the respective second supporting element 37; and/or
- during execution of the first receiving step and/or the second receiving step, the respective first clamping element 34 is in contact with the respective advancing (second or third) bottle 2 and the respective second clamping element 35 is approached towards the respective first clamping element 34 and, therewith, to the respective (second or third) bottle 2; in particular, the respective second portion 32, even more particular the respective second supporting element 37, is accelerated with respect to the respective first portion 31, even more particular the respective second supporting element 37.

In further detail, control unit 7 is configured to control the each first portion 31 and each second portion 32 such that:
- during execution of the first releasing step and/or the second releasing step the respective first portion 31 withdraws from the respective second portion 32 once the respective bottle 2 starts to be at least partially retained by the respective input star wheel 18; and/or
- during execution of the first receiving step and/or the second receiving step, the respective second portion 32 advances such that the respective second clamping element 35 is in contact with the respective bottle 2 when the respective bottle 2 is released from the respective output star wheel 19.

According to some preferred non-limiting embodiments, each treatment machine 3 and 4 (and 11) comprises at least one fixed first support surface 38 and one fixed second support surface 39 arranged at the respective input star wheel 18 and the respective output star wheel 19, each support surface 38 and 39 being configured to laterally contact and support bottles 2 during transfer of bottles 2 respectively from and to the respective cart 6.

Preferentially, each first support surface 38 and each second support surface 39 is arranged at respectively an inlet portion of the respective input star wheel 23 and an outlet portion of the respective output star wheel 24.

Preferentially, each support surface 38 and 39 has an arc-shaped profile.

With particular reference to Figures 1 to 4B, linear conveyor 5 comprises a guide 40 external to linear motor 30 and configured to carry out, during said transporting step, a guiding step during which the respective bottles 2, in particular the respective clamped bottles 2, are guided during the respective transporting movement.

In more detail, endless track P lies on a plane and defines, on said plane, an internal region 45 surrounded by endless track P and an external region 46 surrounding endless track P.

Preferentially, each first clamping element 34 protrudes from the respective first supporting element 36 and towards external region 46 and each second clamping element 35 protrudes from the respective second supporting element 37 and towards external region 46.

Preferentially, treatment machines 3 and 4, in particular also treatment machine 11 and feeding machine 8 are located in external region 46.

In this way, each of the first machine 3 and the second machine 4, and in particular the respective input star 18 or the respective output star 19, has not to be very close to the conveyor 5, because the extension of each of the first clamping element 34 and the second clamping element 35 towards said external region 46 can cover the distance between the conveyor 5 and the input star 18 or output star 19. In this way it is reduced the risk of undesired contact between the machine 3 or 4 and the conveyor 5 during the installation step of the apparatus 1.

This allows to make easier the coupling between the linear nature of the conveyor 5 and the rotative nature of the machines 3 and 4.

To improve this latter effect, the first clamping element 34 and the second clamping element 35 can be elongated towards said external region 46.

The guide 40 reduces undesired vertical oscillations of the receptacle when it is transported by the cart 6, also in the case the first clamping element 34 and the second clamping element 35 are elongated towards the external region 46.

In use, treatment apparatus 1 treats bottles 2, in particular at least fills bottles 2 with a pourable product and applies at least one closing and/or sealing element onto each bottle 2. In particular, treatment apparatus 1 also applies at least one respective label onto each bottle 2.

In more detail, operation of treatment apparatus 1 comprises at least the following steps:
- the respective first treating step, during which first treatment machine 3 executed a first treatment on each bottle 2;
- the respective second treating step, which is different from said first treatment step and during which second treatment machine 4 sequentially executes a second treatment on bottles 2; and
   for each cart 6 and during one single lap:
- a respective first releasing step, during which cart 6 releases to first treatment machine 3, in particular the respective input star wheel 18, a respective first bottle 2;
- a respective first receiving step, during which cart 6 receives from first treatment machine 3, in particular the respective output star wheel 19, a second respective bottle 2;
- a respective transferring step, during which cart 6 transfers the respective second bottle 2 from first treatment machine 3, in particular the respective output star wheel 19, to second treatment machine 4, in particular the respective input star wheel 18;
- a respective second releasing step, during which cart 6 releases second bottle 2 to second treatment machine 4, in particular the respective input star wheel 18;
- a respective second receiving step, during which cart 6 receives from second treatment machine 4, in particular the respective output star wheel 19, a respective third bottle 2.

Preferentially, operation of treatment apparatus 1 also comprises a third treatment step, during which third treatment machine 11 executes a third treatment on bottles 2.

Preferentially, operation of treatment apparatus 1 also comprises a respective second transferring step, during which cart 6 transfers the respective third bottle 2 from second treatment machine 4, in particular the respective output star wheel 19, to third treatment machine 11, , in particular input star wheel 23, and a respective third releasing step, during which each cart 6 releases the respective third bottle 2 to third treatment machine 11, in particular input star wheel 23.

Preferentially, operation of treatment apparatus 1 also comprises a feeding step, during which feeding machine 8 feeds bottles 2 to linear conveyor 5.

In more detail, during the first treatment step, each bottle 2 is treated by the respective carousel 15 of first treatment machine 3.

In particular, the first treatment step is a filling step so that during the first treatment step each bottle 2 is filled with the pourable product.

In more detail, during the second treatment step, each bottle 2 is treated by the respective carousel 15 of second treatment machine 4.

In particular, the second treatment step is a capping step so that during the second treatment step at least one respective closing and/or sealing element is applied on each bottle 2.

In more detail, the third treatment step is a labelling step, so that during the third treatment step at least one label is applied onto bottles 2.

In more detail, during the first and second releasing step, in particular also the third releasing step, a relative movement between the respective first portion 31 and the respective second portion 32 along track P is executed. Even more particular, the second portion 32 remains in contact with the respective (first or second or third) bottle 2 and the respective first portion 31 is withdrawn from the respective second portion 32 and the respective bottle 2 (by accelerating the respective first portion 31 with respect to the respective second portion 32), in particular once the respective bottle 2 starts to be at least partially retained by the respective input star wheel 18.

In more detail, during the first and second receiving step, a relative movement between the respective first portion 31 and the respective second portion 32 along track P is executed. Even more particular, the first portion 31 is put in contact with the respective (second or third) bottle 2 and the respective second portion 32 is approached towards the respective first portion 31 and the respective bottle 2

(by accelerating the respective second portion 32 with respect to the respective first portion 31). Preferentially, the second portion 32 is controlled such to get into contact with the respective bottle 2 prior or while the respective output star wheel 24 releases the respective bottle 2.

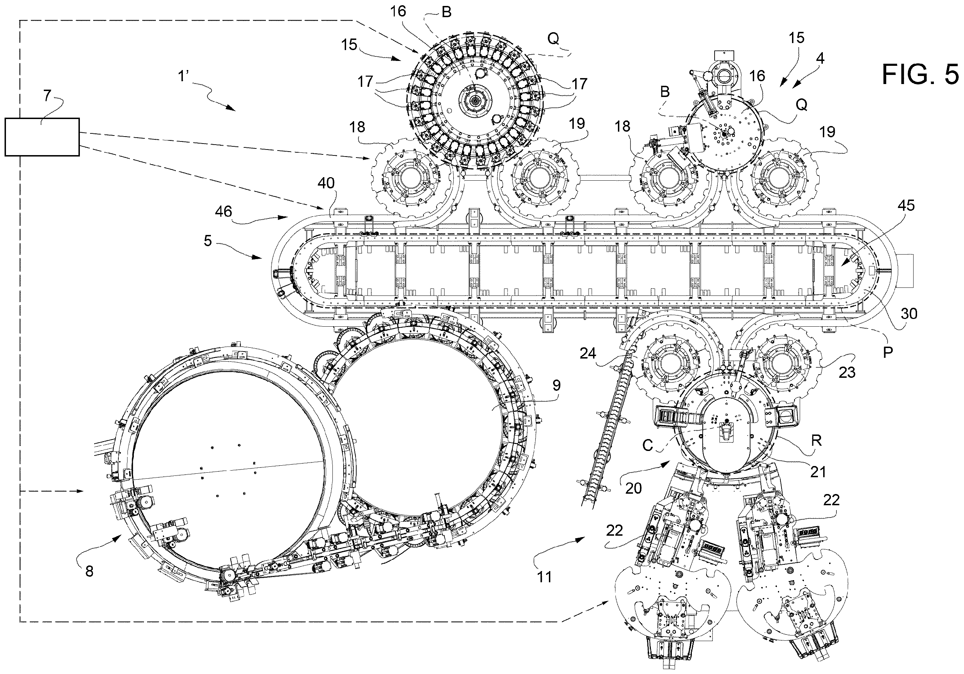

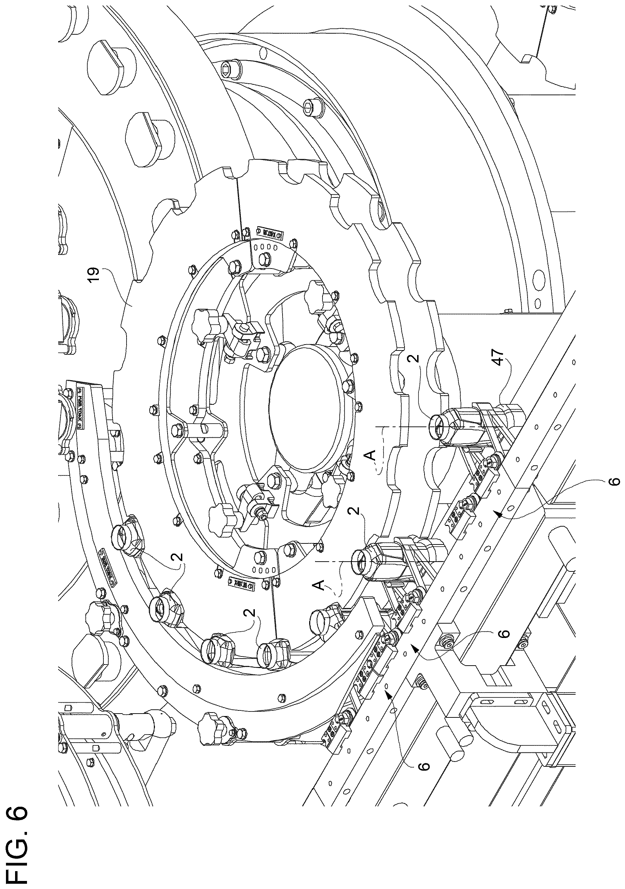

With reference to Figures 5 and 6, number 1' indicates an alternative embodiment of a treatment apparatus according to the present invention; as treatment apparatus 1' is similar to treatment apparatus 1, the following description is limited to the differences between them, and using the same references, where possible, for identical or corresponding parts.

In particular, treatment apparatus 1' differs from treatment apparatus 1 in that bottles 2 are arranged and/or inserted within respective transporting bases 47, which are configured to be clamped by carts 6, in particular the respective retaining assemblies 33, for retaining bottles 2.

In particular, feeding machine 8 is configured to feed both transporting bases 47 and bottles 2 to linear conveyor 5.

According to one possible embodiment, feeding machine 8 is configured to feed bottles 2 being arranged and/or inserted within the respective transporting bases 47 to carts 6. Alternatively, feeding machine 8 could be configured to at first feed transporting bases to carts 6 and to insert bottles 2 into the respective transporting bases 47 while being retained by the respective carts 6.

As operation of treatment apparatus 1' is similar to operation of treatment apparatus 1, in the following we only describe the difference between operation of treatment apparatus 1 and treatment apparatus 1'.

In particular, operation of treatment apparatus 1' differs from operation of treatment apparatus 1 in that during the feeding step also the transport bases 47 are fed to linear conveyor 5.

The advantages of treatment apparatuses 1 and 1' and/or the method according to the present invention will be clear from the foregoing description.

In particular, treatment apparatus 1 and 1' and its operation allows for an increased flexibility and a reduced complexity as advancement of carts 6 can be adapted to the operation conditions of treatment machines 3 and 4, and in particular also treatment machine 11. Operation of carts 6 can be adapted to the respective operation speeds of treatment machines 3 and 4, in particular also of treatment machine 11.

A further advantage resides in providing for carts 6 having each the respective first portion 31 and the respective second portion 32. This allows to increase the reactivity of linear conveyor 5.

Clearly, changes may be made to treatment apparatus 1 or 1' and/or the method as described herein without, however, departing from the scope of protection as defined in the accompanying claims.

## Claims

1. Treatment apparatus (1, 1') for the treatment of a plurality of receptacles (2), comprising:
- a first treatment machine (3) configured to carry out sequentially on each receptacle (2) a respective first treating step;
- a second treatment machine (4) configured to carry out sequentially on each receptacle (2) a respective second treating step different from said first treating step;
- a linear conveyor (5) comprising a plurality of mechanically independent carts (6) and configured to carry out, for each cart (6), a respective transporting step, during which the cart (6) is subjected to a respective transporting movement along an endless track (P), said transporting movement comprising the cart (6) doing one or more laps along the endless track (P); and
- a control unit (7) configured to control operation of at least the carts (6) along the endless track (P);
wherein the control unit (7) is configured to control each of said carts (6) such that each cart (6) carries out, during one single lap:
- a respective first releasing step, during which the cart (6) releases to the first treatment machine (3) a first respective receptacle (2) of said plurality of receptacles (2) ;
- a respective first receiving step, during which the cart (6) receives from the first treatment machine (3) a respective second receptacle (2) of said plurality of receptacles (2);
- a respective transferring step, during which the cart (6) transfers the respective second receptacle (2) from said first treatment machine (3) to said second treatment machine (4) ;
- a respective second releasing step, during which the cart (6) releases the respective second receptacle (2) to said second treatment machine (4);
- a respective second receiving step, during which the cart (6) receives from said second treatment machine (4) a respective third receptacle (2) of said plurality of receptacles (2).

2. Treatment apparatus according to claim 1, wherein:
- the first treatment machine (3) comprises a first rotative carousel (15) configured for executing sequentially on each receptacle (2) the respective first treating step, a first rotative input star wheel (18) for conveying sequentially each receptacle (2) to said first carousel (15) and before the respective first treating step, and a first rotative output star wheel (19) for conveying sequentially each receptacle (2) from said first carousel (15) and after the respective first treating step;
- the second treatment machine (4) comprises a second rotative carousel (15) configured for executing sequentially on each receptacle (2) the respective second treating step, a second rotative input star wheel (18) for conveying each receptacle (2) to said second carousel (15) and before the respective second treating step, and a second rotative output star wheel (19) for conveying each receptacle (2) from said second carousel (15) and after the respective second treating step;
wherein the control unit (7) is configured to control each of said carts (6) such that:
- during the respective first releasing step, the cart (6) releases the respective first receptacle (2) to said first input star wheel (18);
- during the respective first receiving step, the cart (6) receives the respective second receptacle (2) from said first output star wheel (19);
- during the respective transferring step, the cart (6) transfers the respective second receptacle (2) from said first output star wheel (19) to said second input star wheel (18) ;
- during the respective second releasing step, the cart (6) releases the respective second receptacle (2) to said second input star wheel (18); and
- during the respective second receiving step, the cart (6) receives the respective third receptacle (2) from said second output star wheel (19).

3. Treatment apparatus according to claim 2, wherein:
- each of said carts (6) comprises a respective first portion (31) and a respective second portion (32);
- said control unit (7) is configured so that, for each of said carts (6), the respective first and second receiving steps and the respective first and second releasing steps are carried out by generating a relative movement between the respective first portion (31) and the respective second portion (32), said relative movement being along said endless track (P).

4. Treatment apparatus according to claim 3, wherein, for each of said carts (6):
- the respective first portion (31) comprises a respective first clamping element (34) and a respective first supporting element (36), which supports the respective first clamping element (34);
- the respective second portion (32) comprises a respective second clamping element (35) and a respective second supporting element (37), which supports the respective second clamping element (35), the second supporting element (37) being mechanically independent from the first supporting element (36);
- the relative movement occurs between a clamping condition of the cart (6), according to which one of said first or second or third receptacle (2) is clamped by the cart (6) between the respective first clamping element (34) and the respective second clamping element (35), in such a way that the clamped receptacle (6) is integral with said transporting movement, and a releasing condition of the cart (6), in which none of said receptacles (2) is clamped by the cart (6).

5. Treatment apparatus according to claim 4, wherein the linear conveyor (5) comprises a linear motor (30) defining said endless track (P) and is configured so that, for each of said carts (6), the respective transporting movement and the respective relative movement are caused by means of an electromagnetic interaction between the linear motor (30) and the respective first and second supporting elements (36, 37).

6. Treatment apparatus according to claim 5, wherein the linear conveyor (5) comprises a guide (40) external to said linear motor (30) and configured to carry out, during said transporting step, a guiding step during which a clamped receptacle (2) is guided during said transporting movement.

7. Treatment apparatus according to any of claims from 4 to 6, wherein:
- said endless track (P) lies on a plane and defines, on said plane, an internal region (45) surrounded by the endless track (P) and an external region (46) surrounding the endless track (P);
- for each of said carts (6), the respective first clamping element (34) protrudes from the respective first supporting element (36) and towards said external region (46) ;
- for each of said carts (6), the respective second clamping element (35) protrudes from the second supporting element (37) and towards said external region (46);
- said first and second treatment machines (3, 4) are located in said external region (46).

8. Treatment apparatus according to any one of the previous claims, wherein:
- said first treatment machine (3) is a filling machine, so that said respective first treating step is a filling step, during which the respective receptacle (2) is filled with a pourable product;
- said second treatment machine (4) is a capping machine, so that said respective second treating step is a capping step, during which at least one closing and/or sealing element is applied onto the respective receptacle (2) .

9. Treatment apparatus according to claim 8, comprising:
- a feeding machine (8) configured to carry out sequentially, with respect to each receptacle (2), a respective feeding step, during which the respective receptacle (2) is fed to said linear conveyor (5) before the respective filling step; and
- a labelling machine (11) configured to carry out sequentially on each receptacle (2) a respective labelling step, during which the respective receptacle (2) is labelled after at least the respective filling step.

10. Treatment method for the treatment of a plurality of receptacles (2), comprising:
- sequentially for each receptacle (2) and by means of a first treatment machine (3), a respective first treating step;
- sequentially for each receptacle (2) and by means of a second treatment machine (4), a respective second treating step which is different from said first treating step;
- for each cart (6) of a plurality of mechanically independent carts (6), a respective transporting step, during which the cart (6) is subjected to a respective transporting movement along an endless track (P), said movement comprising the cart (6) doing one or more laps of the track (P);
wherein the method comprises, for each of said carts (6) and during one single lap:
- a respective first releasing step, during which the cart (6) releases to the first treatment machine (3) a first respective receptacle (2) of said plurality of receptacles (2) ;
- a respective first receiving step, during which the cart (6) receives from the first treatment machine (3) a second respective receptacle (2) of said plurality of receptacles (2);
- a respective transferring step, during which the cart (6) transfers the respective second receptacle (2) from said first treatment machine (3) to said second treatment machine (4) ;
- a respective second releasing step, during which the cart (6) releases the respective second receptacle (2) to said second machine (4);
- a respective second receiving step, during which the cart (6) receives from said second treatment machine (4) a respective third receptacle (2) of said plurality of receptacles (2).

11. Treatment method according to claim 10, wherein:
- the first treatment machine (3) comprises a first rotative carousel (15) configured for executing sequentially on each receptacle (2) the respective first treating step, a first input rotative star (18) for conveying sequentially each receptacle (2) to said first carousel (15) and before the respective first treating step, and a first output star wheel (19) for conveying sequentially each receptacle (2) from said first carousel (15) and after the respective first treating step;
- the second treatment machine (4) comprises a second rotative carousel (15) configured for executing sequentially on each receptacle (2) the respective second treating step, a second rotative input star wheel (18) for conveying each receptacle (2) to said second carousel (15) and before the respective second treating step, and a second rotative output star wheel (19) for conveying each receptacle (2) from said second carousel (15) and after the respective second treating step;
wherein, for each of said carts (6):
- during the respective first releasing step, the cart (6) releases the respective first receptacle (2) to said first input star wheel (18);
- during the respective first receiving step, the cart (6) receives the respective second receptacle (2) from said first output star wheel (19);
- during the respective transferring step, the cart (6) transfers the respective second receptacle (2) from said first output star wheel (19) to said second input star wheel (18) ;
- during the respective second releasing step, the cart (6) releases the respective second receptacle (2) to said second input star wheel (18);
- during the second respective receiving step, the cart (6) receives the respective third receptacle (2) from said second output star wheel (19).

12. Treatment method according to claim 11, wherein:
- each of said carts (6) comprises a respective first portion (31) and a respective second portion (32);
- for each of said carts (6), the respective receiving steps and the respective releasing steps are carried out by generating a respective relative movement between the respective first portion (31) and the respective second portion (32), said relative movement being along said track (P) .

13. Treatment method according to claim 12, wherein, for each of said carts (6):
- the respective first portion (31) comprises a respective first clamping element (34) and a respective first supporting element (36) which supports the respective first clamping element (34);
- the respective second portion (32) comprises a respective second clamping element (35) and a respective second supporting element (37), which supports the respective second clamping element (35);
- the respective relative movement occurs between a clamping condition of the cart (6), according to which one of said first or second or third receptacle (2) is clamped by the cart (6) between the respective first clamping element (34) and the respective second clamping element (35), in such a way that the clamped receptacle (2) is integral with said transporting movement, and a releasing condition of the cart (6), in which none of said receptacles (2) is clamped by the cart (6).

14. Treatment method according to claim 13, wherein the linear conveyor (5) comprises a linear motor (30) defining said track (P) and, for each of said carts (6), the respective transporting movement and the respective relative movement are caused by means of an electromagnetic interaction between the linear motor (30) and the respective supporting elements (36, 37) of the cart (6).

15. Treatment method according (1) to any one of the previous claims from 10 to 14, wherein:
- said first treatment machine (3) is a filling machine, so that said respective first treating step is a filling step, during which the respective receptacle (2) is filled with a pourable product;
- said second treatment machine (4) is a capping machine, so that said respective second treating step is a capping step, during which at least one closing and/or sealing element is applied onto the respective receptacle (6) .
